# EUROPEAN PATENT APPLICATION

(11) **EP 4 339 780 A1**
(43) Date of publication of application: **20.03.2024**
(21) Application number: 23195933.9
(22) Date of filing: 07.09.2023
(51) Int. Cl.: G06F 9/54, H04Q 9/00

(54) **INFORMATION PROCESSING APPARATUS, INFORMATION PROCESSING METHOD, AND INFORMATION PROCESSING PROGRAM**

(30) Priority: 13.09.2022 JP 2022145510
(71) Applicant: Yokogawa Electric Corporation, Tokyo 180-8750 (JP)
(72) Inventor: URABE, Hiroo, Musashino-shi, Tokyo, 180-8750 (JP); YOSHIDA, Yusaku, Musashino-shi, Tokyo, 180-8750 (JP)
(74) Representative: Winter, Brandl - Partnerschaft mbB

(57) **Abstract**

A data receiving server (10) receives, from a data transmitting server (20) that collects measurement data transmitted by a device (30), a data type code indicating a data format and device information including identification information of the device (30); executes a setting allowing reception of the measurement data from the data transmitting server (20) based on the data type code and the device information; and acquiring the data type code, the device information, and the measurement data transmitted by the data transmitting server (20).

## Description

### FIELD

The present invention relates to an information processing apparatus, an information processing method, and an information processing program.

### BACKGROUND

Conventionally, there have been known technologies that collect data from equipment (devices) such as gateway devices, sensor devices, or control devices installed in a facility such as a plant, using a cloud environment. The related technologies are described, for example, in Japanese Patent Application Laid-open No. 2016-091434.

However, with the conventional technologies, effective data integration among web application servers has been difficult. For example, conventional technologies lack generic interface for enabling data integration between a server that transmits data ("data transmitting server", as appropriate) and a server that receives data ("data receiving server", as appropriate).

The present invention is made in consideration of the above, and an object of the present invention is to share data collected by devices effectively.

### SUMMARY

According to an aspect of the embodiments, an information processing apparatus includes a control unit configured to receive, from an information management apparatus that collects measurement data transmitted by a device, a data type code indicating a data format and device information including identification information of the device, execute a setting allowing reception of the measurement data from the information management apparatus based on the data type code and the device information, and acquire the data type code, the device information, and the measurement data transmitted by the information management apparatus.

According to an aspect of the embodiments, an information processing method causing a computer to execute processing includes receiving, from an information management apparatus that collects measurement data transmitted by a device, a data type code indicating a data format and device information including identification information of the device, executing a setting allowing reception of the measurement data from the information management apparatus based on the data type code and the device information, and acquiring the data type code, the device information, and the measurement data transmitted by the information management apparatus.

According to an aspect of the embodiments, an information processing program that causes a computer to execute processing includes receiving, from an information management apparatus that collects measurement data transmitted by a device, a data type code indicating a data format and device information including identification information of the device, executing a setting allowing reception of the measurement data from the information management apparatus based on the data type code and the device information, and acquiring the data type code, the device information, and the measurement data transmitted by the information management apparatus.

### BRIEF DESCRIPTION OF THE DRAWINGS

FIG. 1 is a schematic illustrating an exemplary configuration of a data integration system according to an embodiment;
FIG. 2 is a block diagram illustrating exemplary configurations of devices according to the embodiment;
FIG. 3 is a schematic illustrating one example of network map information according to the embodiment;
FIG. 4 is a sequence chart illustrating one example of the sequence of a data integration process according to the embodiment; and
FIG. 5 is a schematic for explaining an exemplary hardware configuration.

### DESCRIPTION OF EMBODIMENTS

An information processing apparatus, an information processing method, and an information processing program according to one embodiment of the present invention will now be explained in detail with reference to some drawings. The embodiment described below is not intended to limit the scope of the present invention in any way.

### Embodiment

A configuration of a data integration system 100, a configuration of each device, and processes performed thereby will be explained in the order listed herein, and advantageous effects achieved by the embodiment will be described lastly.

### 1. Configuration of Data Integration System 100

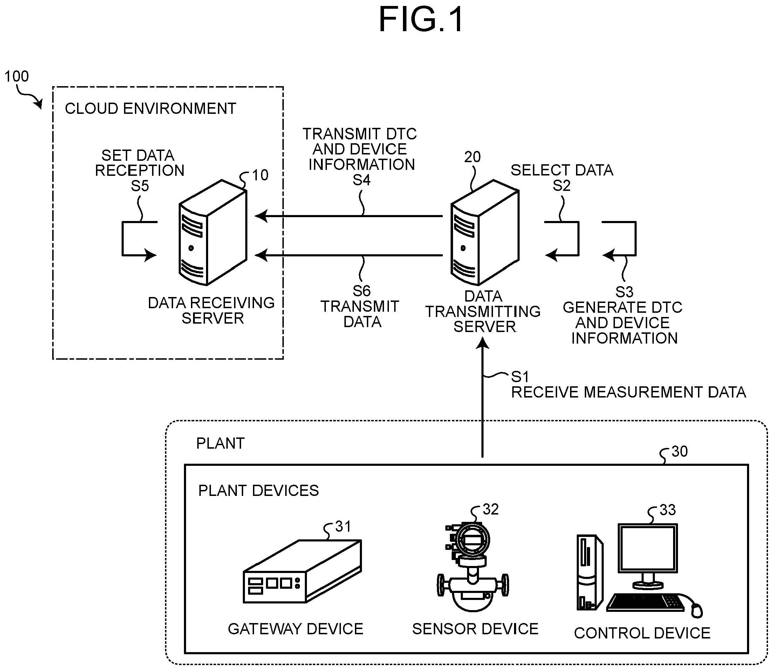

The data integration system 100 according to the embodiment will now be explained in detail with reference to FIG. 1. FIG. 1 is a schematic illustrating an exemplary configuration of the data integration system 100 according to the embodiment. An exemplary configuration of the entire data integration system 100, processes performed by the data integration system 100, and problems of a data integration system of a reference technology will be explained in the order listed herein, and advantageous effects achieved by the data integration system 100 will be described lastly. Explained below in the embodiment is an example of remote monitoring of production in a factory using plant devices 30 that are devices installed in a plant. However, this example is not intended to limit the devices or the field of use in any way, and may be applied to, for example, remote monitoring of environmental measurements, such as those of power, wind power generation, water and sewage, and a river.

### 1-1. Exemplary Configuration of Entire Data Integration System 100

The data integration system 100 includes a data receiving server 10 that is an information processing apparatus, a data transmitting server 20 that is an information management apparatus, and plant devices 30 (a gateway device 31, a sensor device 32, and a control device 33) that are devices. The data receiving server 10 is deployed in a cloud environment. The plant devices 30 are installed in the plant. The data integration system 100 illustrated in FIG. 1 may include a plurality of data receiving servers 10 or a plurality of data transmitting servers 20.

### 1-2. Process Performed in Entire Data Integration System 100

A process performed in the entire data integration system 100 will now be explained. Steps S1 to S6 described below may be performed in a different order. Some of Steps S1 to S6 described below may also be omitted.

### 1-2-1. Measurement Data Receiving Process

The data transmitting server 20 receives measurement data from the plant devices 30 (Step S1). For example, the data transmitting server 20 collects plant information such as sensor values collected by the sensor devices 32 as data in the JavaScript (registered trademark) Object Notation (JSON) format that is text data.

### 1-2-2. Data Selecting Process

The data transmitting server 20 selects the measurement data to be transmitted to the data receiving server 10 (Step S2). For example, the data transmitting server 20 selects the measurement data to be transmitted to the data receiving server 10 that is a higher-level server deployed in the cloud environment, based on a designation by a user U.

### 1-2-3. Setting Information Generating Process

The data transmitting server 20 generates a data type code (DTC) and device information (Step S3). For example, the data transmitting server 20 generates a data type code including the number and the type of pieces of data to be transmitted, and information for displaying the data as a graph (data range and the unit of the data). The data transmitting server 20 also generates device information including hardware information, tag information, and network map information.

### 1-2-4. Setting Information Transmitting Process

The data transmitting server 20 transmits the data type code and the device information to the data receiving server 10 (Step S4).

### 1-2-5. Reception Setting Process

The data receiving server 10 executes data reception settings (Step S5). For example, the data receiving server 10 registers the data type code and the device information received from the data transmitting server 20, and completes the settings for enabling receptions of data in a specific data format from a specific plant device 30.

### 1-2-6. Data Transmitting Process

The data transmitting server 20 transmits the measurement data to the data receiving server 10 (Step S6). For example, the data transmitting server 20 transmits the measurement data collected from the plant device 30, as well as the data type code and the device information, to the data receiving server 10.

### 1-3. Data Integration System of Reference Technology

An outline of a data integration process of a reference technology will be described below, and problems of the reference technology will then be explained.

### 1-3-1. Outline of Data Integration Process of Reference Technology

The data integration system of the reference technology integrates data in the following manner. First, a data transmitting server collects measurement data from a plant device. Second, the data transmitting server selects the measurement data to be transmitted to the data receiving server. Third, an administrator of the data transmitting server checks for the data format of an application on the data transmitting server. Fourth, the administrator of the data transmitting server establishes (fully customizes) a link between the data format of the application on the data transmitting server and the measurement data to be transmitted. Fifth, the administrator of the data transmitting server shapes the format of the data to be transmitted. Sixth, the data transmitting server transmits the measurement data to the data receiving server.

### 1-3-2. Problems in Information Process of Reference Technology

The information process of the reference technology described above has following problems. First, a large number of links needs to be established manually. Second, there is no generic interface for enabling data integration between the data transmitting server and the data receiving server.

### 1-4. Advantageous Effects Achieved by Data Integration System 100

An outline of the data integration system 100 according to the embodiment will be described below, followed by a description of advantageous effects achieved by the data integration system 100.

### 1-4-1. Outline of Data Integration System 100

First, the data transmitting server 20 collects measurement data from the plant devices 30. Second, the data transmitting server 20 selects the measurement data to be transmitted to the data receiving server 10. Third, the data transmitting server 20 generates a data type code (DTC) and device information. Fourth, the data transmitting server 20 transmits the data type code and the device information to the data receiving server 10. Fifth, the data receiving server 10 executes data reception settings. Sixth, the data transmitting server 20 transmits the measurement data to the data receiving server 10.

### 1-4-2. Advantageous Effects Achieved by Data Integration System 100

The data integration system 100 can achieve the following advantageous effects. First, the data format for receiving data from external can be set from the external. In other words, by publicizing a rule and a procedure for generating the data type code for the data receiving server 10 to external parties such as the data transmitting server 20, a data type code can be generated without requiring any internal setting on the data receiving server 10. Second, manual works are reduced, and settings can be executed automatically. In other words, by generating the data type code, data can be shared and common setting information can be used among different devices as long as the devices use the same format (same data type code). In other words, the data integration system 100 enables the data type code and the device information to be set externally, and eliminates the need for any change on the data receiving server 10, so that the cost of external integration can be minimized. Based on the above, the data integration system 100 can share the data collected by the devices effectively.

### 2. Configuration of Each Device in Data Integration System 100

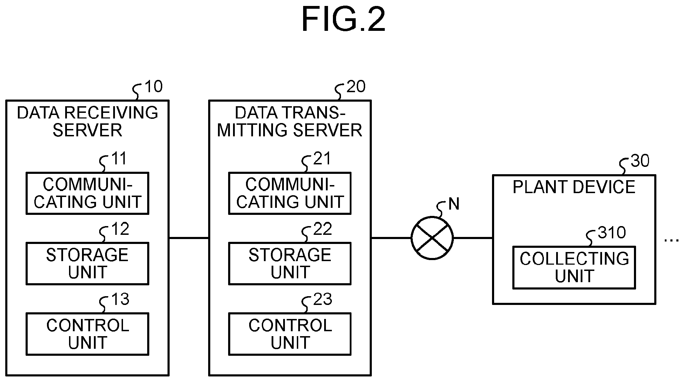

Functional configurations of the devices included in the data integration system 100 illustrated in FIG. 1 will now be explained with reference to FIG. 2. FIG. 2 is a block diagram illustrating exemplary configurations of the devices according to the embodiment. An exemplary configuration of the entire data integration system 100 according to the embodiment will be explained to begin with, and then exemplary configurations of the data receiving server 10, the data transmitting server 20, and the plant devices 30 according to the embodiment will be described in detail.

### 2-1. Exemplary Configuration of Entire Data Integration System 100

As illustrated in FIG. 2, the data integration system 100 includes the data receiving server 10, the data transmitting server 20, and the plant devices 30. The data receiving server 10 and the data transmitting server 20 are communicatively connected to each other over a predetermined communication network. The data transmitting server 20 and the plant devices 30 are communicatively connected to each other over a communication network N, such as a cellular telephone network.

The data receiving server 10 is not limited to a server device deployed in a cloud environment, but may also be a physical server, a virtual machine, or a container, for example.

### 2-2. Exemplary Configuration of Data Receiving Server 10

An exemplary configuration of the data receiving server 10 that is an information management apparatus will now be explained with reference to FIG. 2. The data receiving server 10 includes a communicating unit 11, a storage unit 12, and a control unit 13. The data receiving server 10 may include an input unit (such as a keyboard or a mouse) for receiving various operations from the administrator of the data integration system 100, and a display unit (such as an LCD display) for displaying various types of information.

### 2-2-1. Communicating Unit 11

The communicating unit 11 is responsible for data communication with other devices. For example, the communicating unit 11 performs data communication with communication devices via routers or the like. The communicating unit 11 can also perform data communication with an operator's terminal, not illustrated.

### 2-2-2. Storage Unit 12

The storage unit 12 stores therein various types of information that are referred to in the operation of the control unit 13, as well as various types of information having been acquired in the operation of the control unit 13. The storage unit 12 is implemented as, for example, a semiconductor memory element such as a random access memory (RAM), a flash memory, or a storage device such as a hard disk or an optical disc. In the example in FIG. 2, the storage unit 12 is installed in the data receiving server 10, but may also be installed outside the data receiving server 10, or the storage unit may be installed in plurality.

### 2-2-3. Control Unit 13

The control unit 13 governs the control of the entire data receiving server 10. The control unit 13 may be implemented as an electronic circuit such as a central processing unit (CPU) and a micro-processing unit (MPU), or an integrated circuit such as an application-specific integrated circuit (ASIC) and a field-programmable gate array (FPGA), for example.

The control unit 13 receives, from the data transmitting server 20 that is an information management apparatus that collects measurement data transmitted from a device, a data type code indicating a data format and device information including identification information of the device.

### Data Type Code

The data type code is an identifier of a format of data to be transmitted, and is a code including the number and the type of pieces of data to be transmitted, and information for displaying the data as a graph (data range and the unit of the data).

### Device Information

The device information includes hardware information, tag information, and network map information. The hardware information, the tag information, and the network map information will now be explained in the order listed herein.

### Hardware Information

The hardware information is unique hardware information for identifying an individual device, including a hardware ID (identifier), an Internet Protocol (IP) address, and other configurations that are uniquely assigned and are different from one another even among the devices of the same type.

### Tag Information

The tag information is information like a virtual box, and a user U can freely assign a tag name to a location, a device, or the like. Therefore, the user U can change hardware (device) without changing the tag name or the like by linking a tag to the hardware information or detaching the tag therefrom.

### Network Map Information

The network map information is information describing information of a virtual network connection between the cloud environment and the tag. The data receiving server 10 can receive data from the tag (hardware) having been set, by setting a network map in such a manner that a logical connection is established with the data receiving server 10 that is a cloud application.

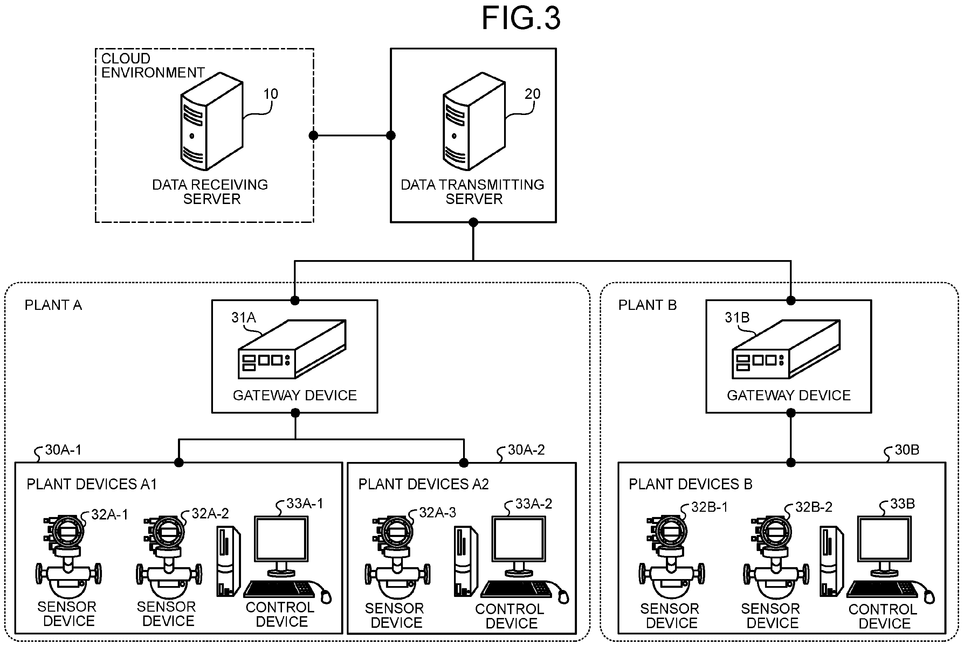

A specific example of the network map information will now be explained with reference to FIG. 3. FIG. 3 is a schematic illustrating one example of the network map information according to the embodiment. As illustrated in FIG. 3, the network map information is information illustrating a hierarchical relation and connections among the data receiving server 10, the data transmitting server 20, the plant devices 30 (the gateway devices 31, the sensor devices 32, and the control devices 33), and the like. In other words, in the example in FIG. 3, the data receiving server 10 deployed in a cloud environment is connected to the data transmitting server 20. The data transmitting server 20 is also connected to the plant devices 30.

To explain the plant devices 30, in "Plant A", a gateway device 31A is hierarchically connected to plant devices 30A-1 indicated as "Plant Devices A1" (a sensor device 32A-1, a sensor device 32A-2, and a control device 33A-1), and to plant devices 30A-2 indicated as "Plant Devices A2" (a sensor device 32A-3 and a control device 33A-2). Similarly, in "Plant B", a gateway device 31B is hierarchically connected to plant devices 30B (a sensor device 32B-1, a sensor device 32B-2, and a control device 33B) indicated as "Plant Devices B".

Based on the data type code and the device information, the control unit 13 executes settings for enabling receptions of measurement data from the data transmitting server 20 that is an information management apparatus. For example, the control unit 13 executes settings for receiving measurement data from the data transmitting server 20 by storing the data type code and the device information in the storage unit 12 and making the data type code and the device information transmitted by the data transmitting server 20 available for reference.

The control unit 13 can also change the reception settings executed based on the data type code and the device information received from the data transmitting server 20.

The control unit 13 refers to the storage unit 12, and, if only a data type code is stored, receives only the device information from the data transmitting server 20, and stores the device information in the storage unit 12. The control unit 13 also refers to the storage unit 12, and, if only device information is stored, receives only the data type code from the data transmitting server 20, and stores the data type code in the storage unit 12.

The control unit 13 acquires the data type code, the device information, and the measurement data transmitted from the data transmitting server 20 that is an information management apparatus. For example, the control unit 13 acquires the data {data type code, hardware ID, measurement data} transmitted by the data transmitting server 20, and stores the data in the storage unit 12. At this time, at a data receiving port, the control unit 13 checks for the inconsistency of the data type code actually transmitted with the measurement data with the information having been registered in advance as a data type code, and, if there is any inconsistency, does not receive the information. In other words, the control unit 13 can acquire measurement data only if both of the data type code and the device information are available.

The control unit 13 also receives error type information and other related information, in addition to the data type code, the device information (the hardware information, the tag information, the network map information) and the measurement data.

The control unit 13 may receive the measurement data either in the JSON format or in the FTP format. In other words, the control unit 13 may receive the measurement data for each of the devices, or receive a plurality of pieces of measurement data all at once.

### 2-3. Exemplary Configuration of Data Transmitting Server 20

An exemplary configuration of the data transmitting server 20 that is an information management apparatus will now be explained with reference to FIG. 2. The data transmitting server 20 includes a communicating unit 21, a storage unit 22, and a control unit 23. The data transmitting server 20 may include an input unit (such as a keyboard or a mouse) for receiving various operations from the administrator of the data integration system 100, and a display unit (such as an LCD display) for displaying various types of information.

### 2-3-1. Communicating Unit 21

The communicating unit 21 is responsible for data communication with other devices. For example, the communicating unit 21 performs data communication with each communication device via routers or the like. The communicating unit 21 can also perform data communication with an operator's terminal, not illustrated.

### 2-3-2. Storage Unit 22

The storage unit 22 stores therein various types of information that are referred to in the operation of the control unit 23, as well as various types of information having been acquired in the operation of the control unit 23. The storage unit 22 is implemented as, for example, a semiconductor memory element such as a RAM, a flash memory, or a storage device such as a hard disk or an optical disc. In the example in FIG. 2, the storage unit 22 is installed in the data transmitting server 20, but may also be installed outside the data transmitting server 20, or the storage unit may be installed in plurality.

### 2-3-3. Control Unit 23

The control unit 23 governs the control of the entire data transmitting server 20. The control unit 23 may be implemented as an electronic circuit such as a CPU or an MPU, or an integrated circuit such as an ASIC or FPGA, for example.

The control unit 23 collects the measurement data transmitted by the device. For example, the control unit 23 receives the measurement data in the JSON format, from the plant devices 30 such as the gateway device 31, the sensor device 32, and the control device 33 installed in the plant. The control unit 23 stores the collected measurement data in the storage unit 22.

The control unit 23 generates a data type code indicating the data format, and device information including device identification information. For example, the control unit 23 generates the data type codes to be transmitted by the data transmitting server 20 to the data receiving server 10, in accordance with rules in the data type code retained on the data receiving server 10. The control unit 23 may generate the data type code using the existing data type code.

The control unit 23 transmits the data type code and the device information to the data receiving server 10 that is an information processing apparatus. At this time, the control unit 23 may acquire the existing settings of the data type code on the data receiving server 10 via a Web application programming interface (API), and transmit the settings to the data receiving server 10 using an adding and correcting function of the data transmitting server 20. In other words, the control unit 23 can access the data receiving server 10 automatically, and reflect the settings on the data transmitting server 20 automatically to the data receiving server 10 via the Web API.

The control unit 23 can transmit the data type code in a single file (text file such as comma-separated values (CSV)) or a plurality of files that are zipped (ZIP file). At this time, the data receiving server 10 can read either the single file or the ZIP file, as long as the file is in accordance with the data format.

The control unit 23 transmits the data type code, the device information, and the measurement data to the data receiving server 10 that is an information processing apparatus. For example, the control unit 23 transmits the data type code, the device information, and the measurement data in the JSON format or the FTP format.

The control unit 23 also transmits error type information and other related information, in addition to the data type code, the device information (the hardware information, the tag information, the network map information) and the measurement data.

The control unit 23 generates an ID based on numerical values specified by the data receiving server 10 so that no ID contention occurs on the data receiving server 10 even if data transmitting servers 20-2, 20-3, ... other than the data transmitting server 20 update the setting information such as data type code. Therefore, no contention of the IDs assigned by the data transmitting servers 20, 20-2, 20-3, ... occurs on the data receiving server 10.

### 2-4. Exemplary Configuration of Plant Device 30

An exemplary configuration of the plant device 30 according to the embodiment will now be explained with reference to FIG. 2. Examples of the plant device 30 include a gateway device 31 that is a communication device, a sensor device 32 that is a measurement instrument, and a control device 33 that governs the control of the plant device 30. The plant device 30 includes a collecting unit 310.

### 2-4-1. Collecting Unit 310

The collecting unit 310 collects data. For example, the collecting unit 310 collects measurement data that is data in the plant. The collecting unit 310 also transmits the data. For example, the collecting unit 310 transmits the collected measurement data to the data transmitting server 20.

### 3. Sequence of Process Performed by Data Integration System 100

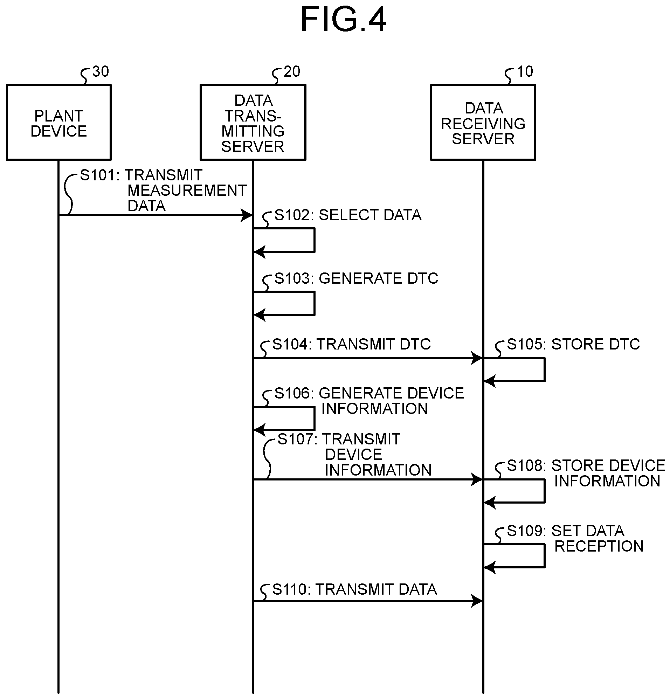

The sequence of processes performed by the data integration system 100 according to this embodiment will now be explained with reference to FIG. 4. FIG. 4 is a sequence chart illustrating one example of the sequence of a data integration process according to the embodiment. The processes at Steps S101 to S110 described below may be performed in a different order. Some of the processes at Steps S101 to S110 described below may also be omitted.

### 3-1. Measurement Data Collecting Process

The plant device 30 transmits the measurement data to the data transmitting server 20 (Step S101). For example, the plant device 30 transmits plant information collected by the gateway device 31, the sensor device 32, and the control device 33 to the data transmitting server 20.

### 3-2. Data Selecting Process

The data transmitting server 20 selects the measurement data to be transmitted to the data receiving server 10 (Step S102). For example, the data transmitting server 20 selects the measurement data to be transmitted to the data receiving server 10 that is a higher-level server set up in a cloud environment, based on a designation of the user U.

### 3-3. Data Type Code Transmitting Process

First, the data transmitting server 20 generates a data type code (DTC) (Step S 103). For example, the data transmitting server 20 generates a data type code including the number and the type of pieces of data to be transmitted, and information for displaying the data as a graph (data range and the unit of the data). Second, the data transmitting server 20 transmits the data type code to the data receiving server 10 (Step S104). Third, the data receiving server 10 stores therein the data type code (Step S105). For example, the data receiving server 10 stores the data type code received from the data transmitting server 20 in the storage unit 12.

### 3-4. Device Information Transmitting Process

First, the data transmitting server 20 generates device information (Step S 106). For example, the data transmitting server 20 generates device information including hardware information, tag information, and network map information. Second, the data transmitting server 20 transmits the device information to the data receiving server 10 (Step S 107). Third, the data receiving server 10 stores therein the device information (Step S108). For example, the data receiving server 10 stores the device information received from data transmitting server 20 in the storage unit 12.

### 3-5. Reception Setting Process

The data receiving server 10 executes data reception settings (Step S109). For example, the data receiving server 10 completes the settings for enabling receptions of data in specific data format from a specific plant device 30.

### 3-6. Data Transmitting Process

The data transmitting server 20 transmits the measurement data to the data receiving server 10 (Step S 110). For example, the data transmitting server 20 transmits the measurement data collected from the plant device 30, as well as the data type code and the device information, to the data receiving server 10.

### 4. Advantageous Effect Achieved by Embodiment

Finally, an advantageous effect achieved by the embodiment will now be explained. An advantageous effect corresponding to the process according to the embodiment will be explained below.

The process according to the embodiment described above includes: receiving a data type code indicating a data format and device information including the identification information of a device from the data transmitting server 20 that collects measurement data transmitted by the device; executing a setting allowing reception of the measurement data from the data transmitting server 20, based on the data type code and the device information; and acquiring the data type code, the device information, and the measurement data transmitted by the data transmitting server 20. Therefore, this process makes it possible to share the data collected by the devices effectively.

### System

The processing sequence, the control sequence, the specific names, and information including various types of data and parameters indicated above or in the drawings may be changed in any way, unless specified otherwise.

The elements of each of the devices illustrated are merely functional and conceptual representations, and do not always need to be physically configured in the manner illustrated. In other words, specific configurations in which the devices are distributed or integrated are not limited to those illustrated in the drawings. To put it in other words, whole or a part thereof may be functionally or physically distributed or integrated into any units, depending on various loads and utilizations.

Furthermore, whole or any part of the processing functions executed in each of the devices may be implemented as a central processing unit (CPU) and a computer program parsed and executed by the CPU, or as hardware using wired logics.

### Hardware

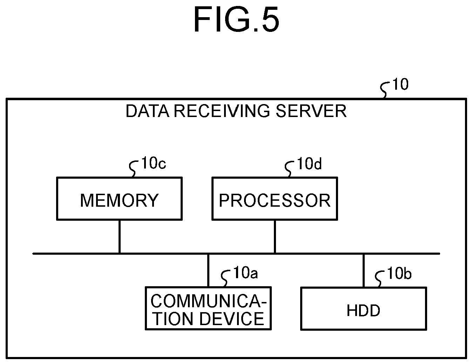

An exemplary hardware configuration of the data receiving server 10 that is an information processing apparatus will now be explained. Other devices such as the data transmitting server 20 may have the same hardware configuration. FIG. 5 is a schematic for explaining the exemplary hardware configuration. As illustrated in FIG. 5, the data receiving server 10 includes a communication device 10a, a hard disk drive (HDD) 10b, a memory 10c, and a processor 10d. The units illustrated in FIG. 5 are connected to one another via a bus, for example.

The communication device 10a is a network interface card, for example, and communicates with another server. The HDD 10b stores therein a computer program for operating the functions illustrated in FIG. 2 and a database.

The processor 10d runs processes for performing the functions explained with reference to FIG. 2 or the like, by reading a computer program for executing processes that are the same as those executed by the processing units illustrated in FIG. 2 from the HDD 10b, for example, and loading the computer program onto the memory 10c. For example, this process performs the same functions as those performed by the data receiving server 10. Specifically, the processor 10d reads a computer program having the same functions as those of the control unit 13 or the like from the HDD 10b, for example. The processor 10d then performs the processes for performing the same processes as those performed by the control unit 13 or the like.

By reading and executing a computer program in the manner described above, the data receiving server 10 operates as an apparatus executing various types of processing method. The data receiving server 10 may also implement the functions that are the same as those described in the embodiment, by causing a medium reading device to read the computer program described above from a recording medium, and by executing the computer program. The computer program mentioned in this other embodiment is not limited to that executed by the data receiving server 10. For example, the present invention may be applied in the same manner in a configuration in which another computer or a server executes the computer program, or in which these devices execute the computer program by cooperating with each other.

This computer program may be distributed over a network such as the Internet. This computer program may be implemented in a manner recorded in a computer-readable recording medium, such as a hard disk, a flexible disk (FD), a compact disc read-only memory (CD-ROM), a magneto-optical disc (MO), or a digital versatile disc (DVD), and performed by causing a computer to read the computer program from the recording medium and executing the computer program.

This invention has the advantageous effect of making it possible to share the data collected by the devices effectively.

## Claims

1. An information processing apparatus (10) comprising a control unit (13) configured to:
receive, from an information management apparatus (20) that collects measurement data transmitted by a device (30), a data type code indicating a data format and device information including identification information of the device (30);
execute a setting allowing reception of the measurement data from the information management apparatus (20) based on the data type code and the device information; and
acquire the data type code, the device information, and the measurement data transmitted by the information management apparatus (20).

2. An information processing method causing a computer (10) to execute processing comprising:
receiving, from an information management apparatus that collects measurement data transmitted by a device (30), a data type code indicating a data format and device information including identification information of the device (30);
executing a setting allowing reception of the measurement data from the information management apparatus (20) based on the data type code and the device information; and
acquiring the data type code, the device information, and the measurement data transmitted by the information management apparatus (20).

3. An information processing program that causes a computer (10) to execute processing comprising:
receiving, from an information management apparatus (20) that collects measurement data transmitted by a device (30), a data type code indicating a data format and device information including identification information of the device (30);
executing a setting allowing reception of the measurement data from the information management apparatus (20) based on the data type code and the device information; and
acquiring the data type code, the device information, and the measurement data transmitted by the information management apparatus (20).
